# EUROPÄISCHE PATENTSCHRIFT

(11) **EP 2 301 696 B1**
(45) Veröffentlichungstag und Bekanntmachung des Hinweises auf die Patenterteilung: **02.09.2015**
(21) Anmeldenummer: 10177941.1
(22) Anmeldetag: 21.09.2010
(51) Int. Cl.: B23B 31/113, B23Q 3/12

(54) **Kombination eines Aufnahmekörpers und eines insbesondere als Werkzeug- oder Werkstückhalter ausgebildeten Einsatzes, ein Aufnahmekörper und ein Einsatz für eine solche Kombination**
Combination of a receiving body and an insert, the insert being particularly a tool or workpiece holder, a receiving body and an insert of such a combination
Combinaison d'un corps de réception et d'un insert, l'insert étant notamment développé comme support d'outil ou de pièce à usiner, un corps de réception et un insert pour une telle combinaison

(30) Priorität: 23.09.2009 DE 102009042665
(43) Veröffentlichungstag der Anmeldung: 30.03.2011
(73) Patentinhaber: ESA Eppinger GmbH, 73770 Denkendorf (DE)
(72) Erfinder: Neumeier, Manfred, 73733, Esslingen (DE)
(74) Vertreter: Rüger, Barthelt & Abel

(56) Entgegenhaltungen:
- DE-U1- 29 914 047
- GB-A- 2 248 199
- US-A- 6 059 492
- US-A1- 2006 039 766

## Beschreibung

Die Erfindung betrifft eine Kombination eines Aufnahmekörpers und eines insbesondere als Werkzeug- oder Werkstückhalter ausgebildeten Einsatzes, der mit dem Aufnahmekörper verbindbar ist gemäss dem Oberbegriff des Patentanspruchs 1 und einen Aufnahmekörper gemäss dem Oberbegriff des Patentanspruchs 11 sowie einen Einsatz für eine solche Kombination gemäss dem Oberbegriff des Patentanspruchs 24.

Unter einem Aufnahmekörper ist hierbei, um einige Beispiele zu benennen, eine feststehende oder angetriebene Spindel, ein Futter, ein Bohrwerkzeug, eine Werkzeugrevolverscheibe oder dergleichen, insbesondere auch ein Werkzeughalter etwa nach DIN 69880, Juli 1990, Teil 8, Seiten 1 bis 3 verstanden, wie er in vielfältigen Ausführungsformen für feststehende und umlaufende Werkzeuge in der Praxis bekannt ist.

Beispielsweise bei CNC-Werkzeugmaschinen für die spangebende Fertigung ist es bekannt, Werkzeuge entweder direkt oder mittels eines Werkzeughaltereinsatzes in einen Aufnahmekörper, beispielsweise eine Spindel der entsprechenden Antriebseinheiten, mittels automatischer Werkzeugwechseleinrichtungen einzuwechseln, um so eine entsprechende Flexibilität bezüglich der verschiedenen Bearbeitungsaufgaben zu erreichen und auch verschlissene Werkzeuge schnell und genau auswechseln zu können. Um diesen Werkzeugwechselvorgang zu ermöglichen und zu gewährleisten, dass nach dem Werkzeugwechsel die erforderliche hohe Bearbeitungsgenauigkeit erhalten bleibt, werden an die als Kupplungsstelle bezeichnete Schnittstelle zwischen dem Werkzeug oder dem Werkzeughaltereinsatz und dem Aufnahmekörper hohe Anforderungen gestellt. In der Praxis haben sich insbesondere Schnittstellen mit einer sogenannten Kegel-/Planverbindung durchgesetzt, von denen zwei Beispiele in der DE 100 48 910 A1 und der DE 102 19 600 C5 beschrieben sind. Der Aufnahmekörper weist bei diesen bekannten Schnittstellen eine kegelförmige Aufnahmebohrung auf, die von einer rechtwinklig zu der Bohrungsachse verlaufenden ersten Planfläche umgeben ist und in die ein Werkzeughaltereinsatz mit einem entsprechend kegelig geformten Vorsprung oder Spannzapfen einsetzbar ist. An dem Vorsprung oder Spannzapfen ist eine diesen umgebende, rechtwinklig zu der Vorsprungs- oder Spannzapfenachse verlaufend angeordnete zweite Planfläche vorgesehen, während die Kegelwinkel der Aufnahmebohrung und des Vorsprungs oder Spannzapfens zumindest angenähert gleich sind. Die kegelige Aufnahmebohrung und der kegelige Vorsprung oder Spannzapfen des Werkzeughaltereinsatzes sind jeweils zur Werkzeugseite hin sich öffnend, d.h. verbreiternd, ausgebildet, wodurch sich eine leichte Montage des Werkzeughaltereinsatzes an der Schnittstelle an dem Aufnahmekörper ergibt.

Die Qualität der Verbindung zwischen dem Werkzeughaltereinsatz und dem Aufnahmekörper an der Schnittstelle ist aber in erheblichem Maße von der Sauberkeit an der Schnittstelle abhängig. Schon geringe Verschmutzungen, die beispielsweise beim Werkzeugwechsel, etwa auf die Kegelfläche der Aufnahmebohrung oder zwischen die Planflächen des Aufnahmekörpers und des Werkzeughaltereinsatzes gelangen, können zu beträchtlichen Rundlaufungenauigkeiten des Werkzeugs bei in dem Aufnahmekörper gespanntem Werkzeughaltereinsatz führen. Bei automatischen Werkzeugwechselsystemen sind deshalb in der Regel besondere Maßnahmen zur Sauberhaltung der Schnittstelle beim Werkzeugwechsel vorgesehen, die beispielsweise ein Spülen der Aufnahmebohrung und des Werkzeughaltereinsatzes vor und nach dem Werkzeugwechsel beinhalten.

Bei einem Werkzeugwechsel von Hand ist die Sauberhaltung der Schnittstelle wesentlich problematischer, weil Fremdkörper von Verunreinigungen nur bis zu einer bestimmten Größe mit freiem Auge erkannt werden können und die Sauberhaltung der Schnittstelle letzen Endes bedienerabhängig ist.

Außerdem ist bei extrem beengten Platzverhältnissen, wie sie beispielsweise bei NC-gesteuerten Drehmaschinen mit schwenkbaren Werkzeugträgern vorliegen, die Spannung der Werkzeughaltereinsätze in den konischen Aufnahmebohrungen schwierig. Eine Spannung von der dem Werkzeug abgewandten Rückseite des Werkzeughaltereinsatzes aus, beispielsweise mittels einer in den Aufnahmekörper eingesetzten Gewindespindel, ist beispielsweise bei Revolverscheiben nicht möglich.

Aus der DE 299 14 047 U1 ist ein Schneidkopf zum selbstklemmenden Befestigen auf einem Werkzeughalter bekannt, der einen Halteabschnitt aufweist, welcher sich vom hinteren Ende des Schneidkopfs aus erstreckt und mit einem Halteabschnitt eines Werkzeugschaftes zusammenpasst, auf dem der Schneidkopf selbstklemmend befestigbar ist. Der Halteabschnitt des Schneidkopfes ist mit einem Zentrierabschnitt mit einer Umfangszentrierfläche ausgebildet, die, an zumindest zwei Abschnitten, eine im Wesentlichen konische Form aufweist, wobei die Abschnitte zu einem weiten Ende der Umfangszentrierfläche hin divergieren. Der Werkzeugschaft ist mit einem entsprechenden Halteabschnitt ausgebildet, der einen Zentrierabschnitt enthält, welcher eine der Form des Zentrierabschnitts des Schneidkopfes entsprechende Form hat. Ein Positionierabschnitt des Schneidkopfs weist eine Basisfläche auf, die im Wesentlichen senkrecht zur Achse des Schneidkopfes ausgerichtet ist und auf der keilförmige Vorsprünge ausgebildet sind, die am Umfang angeordnet sind und sich in Umfangsrichtung erstrecken und umfangsmäßig voneinander beabstandet sind. In entsprechender Weise ist der Werkzeugschaft mit einer Stirn- oder Vorderfläche gestaltet, die im Wesentlichen senkrecht zur Achse ausgerichtet ist und keilförmige Vorsprünge aufweist, die am Umfang angeordnet sind und sich im Wesentlichen in Umfangsrichtung des Werkzeugschaftes erstrecken. Im zusammengesetzten Zustand dienen miteinander wechselwirkende geneigte Positionierungsflächen der keilförmigen Vorsprünge des Schneidkopfes und des Werkzeugschaftes sowohl als axiale Stütze oder Halterung des Schneidkopfs auf dem Werkzeugschaft als auch zur Drehmomentübertragung, wobei Umfangszentrierflächen des Schneidkopfes und des Werkzeugschaftes mit ihren konischen Abschnitten miteinander in Eingriff stehen. Eine Plananlage zwischen der Basisfläche des Schneidkopfes und der Stirn- oder Vorderfläche des Werkzeugschaftes ist nicht vorhanden; die beiden Flächen sind durch die Vorsprünge im gegenseitigen Abstand gehalten.

Aufgabe der Erfindung ist es deshalb eine Kombination und einen Aufnahmekörper sowie einen Einsatz, insbesondere Werkstück- oder Werkzeughalter zu schaffen, die nicht verschmutzungsanfällig ist und die bei Gewährleistung höchster Rundlaufgenauigkeit schnell und einfach zu bedienen ist, wobei sie auch für kleine Werkzeugdurchmesser (unter ca. 20 mm) geeignet ist.

Zur Lösung dieser Aufgabe weist die Kombination gemäß der Erfindung die Merkmale des Patenanspruchs 1 auf, während ein erfindungsgemäßer Aufnahmekörper und ein erfindungsgemäßer Einsatz, insbesondere Werkstück- oder Werkzeughalter für diese Kombination Gegenstand der Patentansprüche 11 bzw. 24 sind.

Bei der erfindungsgemäßen Kombination weist der Aufnahmekörper auf einer Stirnseite eine zylindrische Aufnahmebohrung auf, die von einer rechtwinklig zur Bohrungsachse verlaufenden ersten Planfläche umgeben ist. Diese Planfläche muss nicht durchgehend sein; sie kann auch unterbrochen sein; in jedem Falle ist sie aber eine mit hoher Genauigkeit fein bearbeitete Planfläche. In der Aufnahmebohrung ist eine zu der Bohrungsachse koaxiale erste Konusfläche mit ihrem verjüngten Ende zu der ersten Planfläche hin weisend angeordnet.

Der dem Aufnahmekörper zugeordnete Einsatz, insbesondere Werkzeug- oder Werkstückhaltereinsatz, weist einen Spannzapfen auf, der zum Einstecken in die Aufnahmebohrung eingerichtet und von einer rechtwinklig zu der Spannzapfenachse verlaufenden zweiten Planfläche umgeben ist, die ebenfalls in Umfangsrichtung unterbrochen ausgebildet sein kann, in jedem Falle aber als fein bearbeitete Planfläche ausgebildet ist. Der Spannzapfen trägt eine im axialen Abstand von der zweiten Planfläche angeordnete zweite Konusfläche, die mit ihrem verjüngten Ende zu der zweiten Planfläche hinweisend angeordnet ist. Bei in die Aufnahmebohrung eingesetztem Spannzapfen liegen die beiden Planflächen aufeinander, während die beiden Konusflächen durch eine begrenzte Verdrehung des Spannzapfens gegenüber der Aufnahmebohrung unter einer die beiden Planflächen gegeneinander pressenden Vorspannung gegeneinander verspannbar sind.

Die in der Tiefe der Aufnahmebohrung liegende, sich in der von der ersten Planfläche weg weisenden Richtung öffnende, d.h. zu der Plananlagefläche hin sich verjüngende erste Konusfläche ist gegen Verschmutzungen schon wegen ihrer Lage in der Tiefe der Aufnahmebohrung weitgehend geschützt. Sollten aber Schmutzteilchen, die beispielsweise größer als 0,01 mm sind, auf der Planfläche oder der Konusfläche abgelagert werden, kann bei entsprechend geringem Spaltmaß zwischen den beiden Planflächen des Aufnahmekörpers und des Einsatzes eine Kupplung zwischen dem Einsatz und dem Aufnahmekörper nicht mehr erfolgen, weil die einander zugewandten Konusflächen durch eine versuchte Drehbewegung des Einsatzes gegenüber dem Aufnahmekörper nicht mehr in Eingriff gebracht werden könne, so dass eine Fehlkupplung vermieden ist.

Die neue Schnittstelle ist insbesondere auch für kleine Werkzeugdurchmesser (kleiner ca. 20 mm) geeignet, bei denen Verschmutzungen erfahrungsgemäß zu größeren Rundlauffehlern führen, weil die Führungsverhältnisse über die Werkzeuglänge ungünstiger werden. Die neue Schnittstelle ist selbstzentrierend und zeichnet sich wegen der jeweils miteinander in Eingriff stehenden Planflächen und Konusflächen, die eine Kegel-/Plananlage bilden, durch hohe Genauigkeit aus. Gleichzeitig ist der Kupplungsvorgang zwischen dem Einsatz und dem Aufnahmekörper durch einfaches Einstecken und Verdrehen des Einsatzes mit seinem Spannzapfen in der Aufnahmebohrung, einfach und schnell durchzuführen, wobei die Schnittstelle im gekuppelten Zustand von Aufnahmekörper und Einsatz hohe Genauigkeit und Stabilität gewährleistet.

Der Aufnahmekörper ist mit seiner zylindrischen Aufnahmebohrung und der Innenkonusfläche verhältnismäßig einfach herstellbar, was in gleichem Maße auch für den insbesondere als Werkstück- oder Werkzeughaltereinsatz ausgebildeten Einsatz gilt. Die Einsätze können dabei an die verschiedenartigsten Spannverhältnisse von Werkstücken oder Werkzeugen angepasst sein, wie es auch denkbar ist, den ganzen Einsatz mit dem Werkzeug beispielsweise aus Stahl oder Hartmetall einstückig herzustellen. Da das Spannen des Einsatzes in der Aufnahmebohrung lediglich durch eine begrenzte Drehbewegung des Einsatzes um die Aufnahmebohrungsachse erfolgen kann, ist die neue Schnittstelle auch bei sehr beengten Platzverhältnissen mit Vorteil einsetzbar.

Weitere Merkmale und Vorteile der Erfindung sind Gegenstand von Unteransprüchen.

In der Zeichnung sind Ausführungsbeispiele des Gegenstandes der Erfindung dargestellt. Es zeigen:
Figur 1 Eine Werkzeugaufnahmevorrichtung mit einer Schnittstelle gemäß der Erfindung, in perspektivischer Darstellung,
Figur 2 die Vorrichtung nach Figur 1, in einer Draufsicht auf die Werkzeugseite und in einem anderen Maßstab,
Figur 3 die Vorrichtung nach Figur 2, geschnitten längs der Linie III-III, in einer Seitenansicht,
Figur 4 den als Werkzeughalter ausgebildeten Einsatz der Vorrichtung nach Figur 3, in einer perspektivischen Darstellung,
Figur 5 den Kopfring der Vorrichtung nach Figur 3, in einer Draufsicht,
Figur 6 eine Einzelheit bei X der Schnittstelle der Vorrichtung nach Figur 3, in einer Teildarstellung und in einem anderen Maßstab,
Figur 7 den Aufnahmekörper der Vorrichtung nach Figur 3, in einer Draufsicht auf die die Aufnahmebohrung enthaltende Stirnseite und in einem anderen Maßstab,
Figur 8 den Aufnahmekörper nach Figur 7, geschnitten längs der Linie VIII-VII der Figur 7, in einer Seitenansicht,
Figur 9 und 10 die Vorrichtung nach Figur 2, unter Veranschaulichung der entspannten und der gespannten Position des Werkzeughaltereinsatzes bezüglich des Aufnahmekörpers, jeweils in einer Querschnittsdarstellung des Aufnahmekörpers nach Figur 8 durch dessen Aufnahmeprofil, in das der Werkzeughaltereinsatz zur Veranschaulichung der beiden verschiedenen Drehstellungen bezüglich des Aufnahmekörpers hinein projiziert ist,
Figur 11 die Vorrichtung nach Figur 3 mit einer abgewandelten Ausführungsform der Schnittstelle, geschnitten längs der Linie XI-XI der Figur 12, in einer ausschnittsweisen Seitenansicht,
Figur 12 die Vorrichtung nach Figur 11, in einer Draufsicht auf die Werkzeugseite,
Figur 13 die Vorrichtung nach Figur 3 mit einer weiteren abgewandelten Ausführungsform der Schnittstelle, geschnitten längs der Linie XIII-XIII der Figur 14 in einer ausschnittsweisen Seitenansicht,
Figur 14 die Vorrichtung nach Figur 13, in einer Draufsicht auf die Werkzeugseite,
Figur 15 die Vorrichtung nach Figur 3 mit einer noch anderen abgewandelten Ausführungsform der Schnittstelle, geschnitten längs der Linie XV-XV der Figur 16 in einer Seitenansicht und im Ausschnitt,
Figur 16 die Vorrichtung nach Figur 15 in einer Draufsicht auf die Werkzeugseite,
Figur 17 einen Werkzeugspanneinsatz für ein Werkzeugschnellwechselsystem mit einem Werkzeugträger mit einer Spannzangenaufnahme gemäß der DE 102 19 600 C5 und mit einer Schnittstelle gemäß der Erfindung, geschnitten längs der Linie XVII-XVII der Figur 8, in einer Seitenansicht,
Figur 18 Werkzeugspanneinsatz nach Figur 17, in einer Draufsicht auf die Werkzeugseite,
Figur 19 eine Antriebseinheit für angetriebene Werkzeuge, zum Beispiel einen Bohrer, mit der die erfindungsgemäße Schnittstelle enthaltenden Vorrichtung nach Figur 1, in perspektivischer Darstellung,
Figur 20 einen 3-Spindelfrontalbohrapparat mit drei Antriebseinheiten nach Figur 19, in perspektivischer teilweise schematischer Darstellung,
Figur 21 den Frontalbohrapparat nach Figur 20, in einer Draufsicht,
Figur 22 eine abgewandelte Ausführungsform des Werkzeugspanneinsatzes nach Figur 4, im axialen Schnitt in einer Seitenansicht und in einem anderen Maßstab,
Figur 23 eine weitere, mit dem Werkzeug einstückige Ausführungsform eines Werkzeughaltereinsatzes für die Vorrichtung nach Figur 1 und
Figur 24 einen Stopfen zum Verschluss des Aufnahmekörpers pers nach Figur 8, im axialen Schnitt, in einer Seitenansicht.

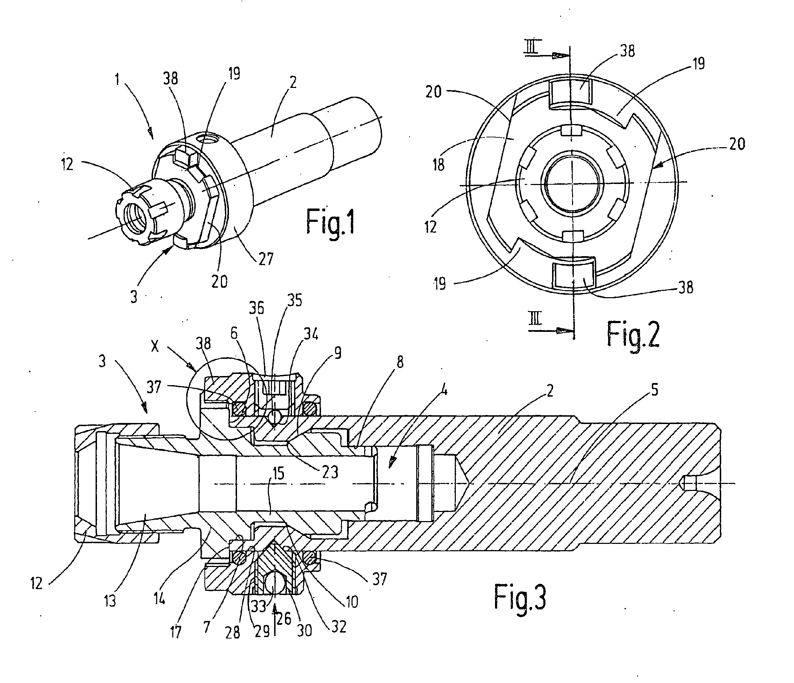

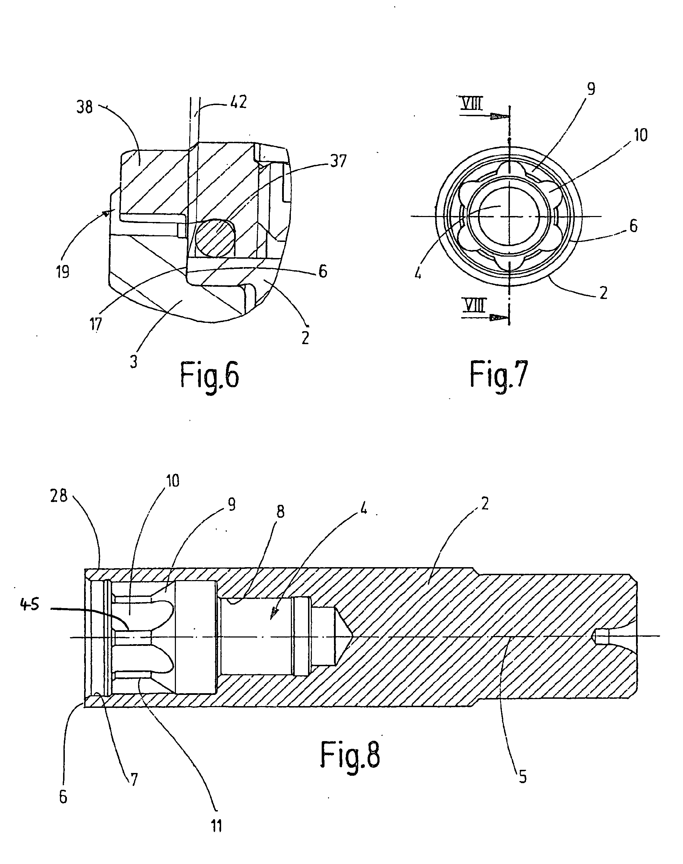

Die in den Figuren 1 bis 3 dargestellte Werkzeugaufnahme oder -haltevorrichtung weist eine auch als Aufnahmesystem zu bezeichnende Schnittstelle 1 zwischen einem als zylindrische Spindel ausgebildeten Aufnahmekörper 2 und einem Werkzeughaltereinsatz auf, der im Folgenden der Einfachheit halber als Einsatz 3 bezeichnet ist. Der Aufnahmekörper 2 kann feststehend oder drehbar gelagert sein. Er weist auf seiner dem Einsatz 3 zugeordneten Stirnseite eine zu dem Aufnahmekörper 2 koaxiale im Wesentlichen zylindrische Aufnahmebohrung 4 auf, deren Gestaltung insbesondere auch aus den Figuren 7 und 8 zu entnehmen und deren Bohrungsachse mit 5 bezeichnet ist.

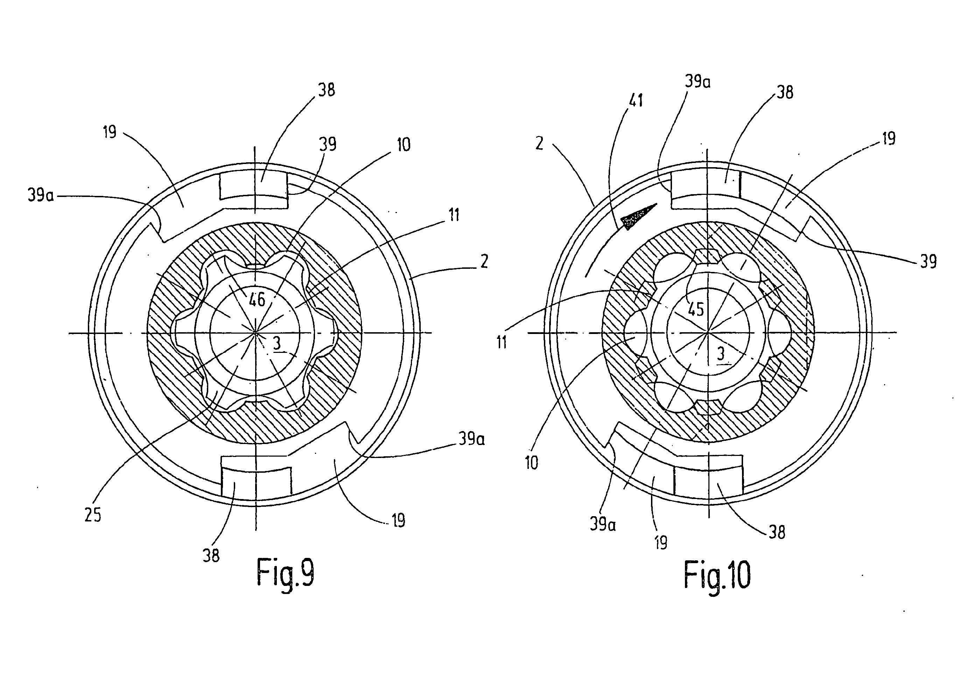

Auf der dem Einsatz 3 zugeordneten Stirnseite (Figur 8, links) des Aufnahmekörpers 2 ist eine rechtwinklig zu der Bohrungsachse 5 verlaufende, fein bearbeitete, maßhaltige erste Planfläche 6 ausgebildet, an die sich über eine Fase eine zylindrische Vorzentrierfläche 7 in der Aufnahmebohrung 4 anschließt, wobei sie, ebenso wie eine weitere Vorzentrierfläche 8 in der Aufnahmebohrung 4, koaxial zu der Bohrungsachse 5 angeordnet ist. Zwischen den beiden Vorzentrierflächen 7, 8 ist an der Innenwand der Aufnahmebohrung 4 eine zu der Bohrungsachse 5 koaxiale erste Konusfläche 9 ausgebildet, die, wie insbesondere aus Figur 3 zu ersehen, mit ihrem verjüngtem Ende 10 zu der ersten Planfläche 6 hin weisend angeordnet ist. Die Konusfläche 9 ist durch achsparallele, im Querschnitt teilkreisförmige, rinnen- oder nutenartige Vertiefungen 10 unterbrochen, die gleichmäßig rings um den Umfang der Aufnahmebohrung 4 angeordnet sind, so dass sich insgesamt das aus Figur 7 zu entnehmende, einer Verzahnung ähnliche Profil ergibt. Bei diesem Profil sind, wie die Figuren 9, 10 deutlich zeigen, zwischen den rinnenartigen Vertiefungen 10 achsparallele Rippen 11 vorhanden, auf denen jeweils die durch die Vertiefungen 10 unterbrochene Konusfläche 9 ausgebildet ist.

Der Einsatz 3 ist bei der in den Figuren 1 bis 4 dargestellten Ausführungsform mit einer Spannmutter 12 für eine Spannzangenaufnahme 13 ausgebildet. Er weist einen Einsatzkörper 14 auf, der auf der einen Seite die Spannzangenaufnahme 13 trägt und der anderen Seite mit einem einstückig angeformten zylindrischen Spannzapfen 15 ausgebildet ist, der zum Einstecken in die Aufnahmebohrung 4 des Aufnahmekörpers 2 eingerichtet ist. Der Spannzapfen 15 ist von einer an dem Einsatzkörper 14 vorgesehenen rechtwinklig zu der Spannzapfenachse 16 verlaufenden, fein bearbeiteten, maßgenauen zweiten Planfläche 17 umgeben und an einem scheibenförmigen Teil 18 mit zwei diametral einander gegenüber liegenden randoffenen Ausnehmungen 19 ausgebildet, die Teile von Mitnehmermitteln bilden, welche im Einzelnen noch erläutert werden. An zwei winkelmäßig gegenüber den Ausnehmungen 19 versetzten einander gegenüber liegenden Seiten sind zwei parallele Schlüsselflächen 20 angeordnet, die zum Ansatz eines Schraubenschlüssels dienen.

Im axialen Abstand von der zweiten Planfläche 17 ist der Spannzapfen 15 mit einem im Wesentlichen zylindrischen zu der Spannzapfenachse 16 koaxialen Profilteil 21 größeren Durchmessers ausgebildet, das eine zweite Konusfläche 22 trägt, die mit ihrem verjüngten Ende 23 zu der zweiten Planfläche 17 hinweisend angeordnet ist. Die Konusfläche 22 ist durch achsparallele, im Querschnitt teilkreisförmige rinnen- oder nutenartige Vertiefungen 24 unterbrochen, die sich über die Länge des Profilteils 21 erstrecken und über dessen Umfang gleichmäßig verteilt angeordnet sind, derart, dass zwischen benachbarten Vertiefungen 24 jeweils auf einem gemeinsamen Zylindermantel liegende Rippen 25 vorhanden sind und sich ein einer Verzahnung ähnliches Profil ergibt.

Wie insbesondere den Figuren 9, 10 zu entnehmen, sind die Vertiefungen 24 mit den dazwischen liegenden Rippen 25 des Profilteils 21 des Spannzapfens 15 mit gleicher Teilung und komplementär zu den Vertiefungen 10 und Rippen 11 des die erste Konusfläche 9 tragenden Innenprofils der Aufnahmebohrung 4 ausgebildet, derart, dass bei in die Aufnahmebohrung 4 eingestecktem Spannzapfen 15 zwei mit Spiel ineinander greifende Verzahnungen vorliegen, die, wie Figur 9 veranschaulicht, ein einfaches Einstecken des Spannzapfens erlauben.

Die Zahl und das Querschnittsprofil der Vertiefungen 10 und der Rippen 11 der Aufnahmebohrung 4 und der Vertiefungen 24 und der Rippen 25 des Spannzapfens 15 können im Übrigen beliebig, beispielsweise abhängig von dem Durchmesser der Aufnahmebohrung und des Spannzapfens oder anderer spezieller Anforderungen, gewählt werden. Anstelle der bei dem dargestellten Ausführungsbeispiel gewählten Anzahl von sechs Vertiefungen 10, 24 können zum Beispiel lediglich zwei oder mehr als sechs Vertiefungen vorhanden sein. Die beispielsweise in Figur 9 dargestellte teilkreisförmige Querschnittsgestalt der Vertiefungen erlaubt eine sehr einfache Herstellung durch Ausfräsen. Mit geeigneten Werkzeugen können auch andere, aus der Verzahnungstechnik bekannte Profile hergestellt werden.

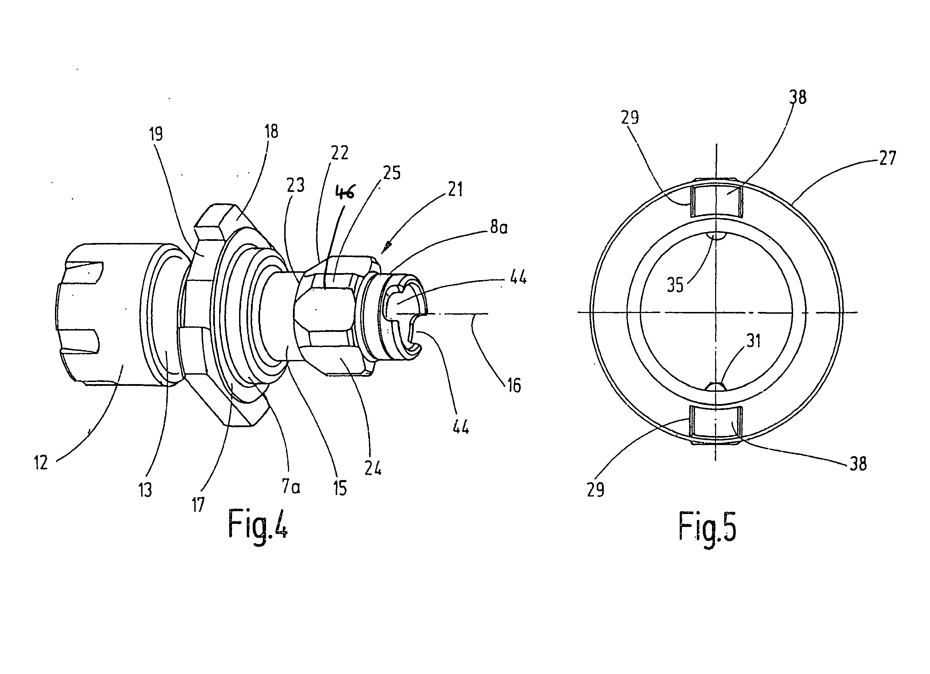

Auf dem Aufnahmekörper 2 sind Spannmittel 26 für einen mit seinem Spannzapfen 15 in die Aufnahmebohrung 4 eingesetzten Einsatz 3 angeordnet. Die Spannmittel 26 weisen bei der in den Figuren 1 bis 8 dargestellten Ausführungsform einen Kopfring 27 von im Wesentlichen rechteckiger Querschnittsgestalt auf, der auf eine zylindrische Passfläche 28 (Figur 3) des Aufnahmekörpers 2 mit einem vorbestimmten radialen Spiel aufgesetzt ist. Der Kopfring 27 ist mit zwei diametral einander gegenüber liegenden radialen Gewindebohrungen 29 versehen (vgl. Figur 5). In eine der Gewindebohrungen 29 ist ein mit einem Innensechskant ausgebildeter Gewindestift 30 eingeschraubt, der mit einer Kegelkuppe 31 in eine kegelige Vertiefung 32 des Aufnahmekörpers 2 im Bereiche dessen Passfläche 28 eingreift und damit den Kopfring 27 formschlüssig auf dem Aufnahmekörper 2 zentriert. In den Innensechskant des Gewindestifts 30 ist eine Kunststoffkugel 33 eingepresst, um ein unbeabsichtigtes Betätigen zu verhindern.

Auf der der kegeligen Vertiefung 32 diametral gegenüber liegenden Seite ist der Aufnahmekörper 2 mit einer ähnlichen kegelförmigen Vertiefung 34 versehen, in die eine Kugel 35 durch eine Druckschraube 36 eingepresst werden kann, welche in der anderen Gewindebohrung 29 vorgesehen ist.

Die Passfläche 28 ist durch zwei Rundschnurringe 37, die in entsprechenden ringförmigen Ausnehmungen des Kopfrings 27 angeordnet sind, nach außen zu abgedichtet.

Auf der freien Stirnseite des Kopfrings 27 sind zwei diametral einander gegenüber liegende, axial vorstehende Mitnehmernasen 38 vorgesehen, die bei in die Aufnahmebohrung 3 eingefügtem Einsatz 3 in dessen Ausnehmungen 19 eingreifen (vgl. Figuren 2, 9, 10) und gleichzeitig zur Lageorientierung in Umfangsrichtung beim Ein- und Auskuppeln des Einsatzes 3 in dem Aufnahmekörper 2 dienen.

Das Ein- und Auskuppeln des Einsatzes 3 in den Aufnahmekörper 2 an der Schnittstelle 1 geschieht in der folgenden Weise:
Der Einsatz 3 wird mit seinem Spannzapfen 15 in der der in Figur 9 dargestellten, entspannten Position entsprechenden Verdrehstellung bezüglich des Aufnahmekörpers 2 mit seinem Spannzapfen 15 in die Aufnahmebohrung 4 eingesteckt. Das Einstecken ist dadurch erleichtert, dass die Mitnehmernasen 38 an einer entsprechenden Seitenwand 39 der jeweiligen Ausnehmung 19 des Einsatzes 3 anliegen und von dieser geführt werden. Gleichzeitig bewirken die axial voneinander beabstandeten Vorzentrierflächen 7, 8 in der Aufnahmebohrung 4, die mit entsprechenden zylindrischen Vorzentrierflächen 7a, 8a an dem Spannzapfen 15 des Einsatzes 3 zusammenwirken, eine Vorzentrierung des Einsatzes 3 bezüglich der Aufnahmebohrung 4, die das Einfügen des Einsatzes 3 weiter erleichtert. Die von den Vertiefungen und Rippen 10, 11 gebildete Innenprofilverzahnung in der Aufnahmebohrung 4 gestattet in dieser Drehlage des Einsatzes 3 ein unbehindertes Einstecken des eine entsprechende Profilverzahnung tragenden Profilteils 21 des Einsatzes 3. Die Teile nehmen dabei die in Figur 9 dargestellte entspannte Position ein.

Sobald die beiden Planflächen 6, 17 des Aufnahmekörpers 2 und des Einsatzes 3 unbehindert satt aufeinander liegen, kann der Einsatz 3 in der Aufnahmebohrung 4 in dem durch einen Pfeil 41 angedeuteten Uhrzeigersinn in seine Spannposition verdreht werden, die dadurch definiert ist, dass die Mitnehmernasen 38 an der anderen Seitenfläche 39a der jeweils zugeordneten Ausnehmung 19 des Einsatzes 3 anliegen. In dieser Drehlage liegen die Konusflächen 9, 22 des Aufnahmekörpers 2 bzw. des Einsatzes 3 im Bereich der Rippen 11 bzw. 25 aufeinander auf, d.h. die Verzahnungsprofile der beiden Teile überdecken sich, wie dies in Figur 10 veranschaulicht ist.

Nunmehr wird die Druckschraube 36 des Kopfringes 27 betätigt, die die Kugel 35 in ihre Vertiefung 34 des Aufnahmekörpers 2 radial eindrückt und damit die Wandung der Aufnahmebohrung 4 des Aufnahmekörpers 2 in dem Bereich zwischen der Konusfläche 9 und der Planfläche 6 elastisch radial nach innen verformt. Um diese elastische Verformung der Wandung der Aufnahmebohrung 4 in diesem Bereich zu ermöglichen, ist der Innendurchmesser des Kopfrings 27 geringfügig größer als der Außendurchmesser der Planfläche 28 auf der er angeordnet ist. Die radiale Durchmesserverformung der zylindrischen Planfläche 28 des Aufnahmekörpers 2 beim Spannvorgang ist verhältnismäßig gering. Sie beträgt beispielsweise ca. 0,006 mm bei dem dargestellten Ausführungsbeispiel.

Zufolge dieser elastischen radialen Durchmesseränderung der Wandung der Aufnahmebohrung 4 im Bereiche der Konusfläche 9 wird die Konusfläche 9 des Aufnahmekörpers 2 an zwei einander gegenüber liegenden Stelle entsprechend radial nach innen gedrückt mit der Folge, dass der Einsatz 3 über seine Konusfläche 22 axial in die Tiefe der Aufnahmebohrung 4 hineingezogen wird, wobei die Größe dieser Zugkraft von der Größe des Kegelwinkels der miteinander zusammenwirkenden Konusflächen 9, 22 abhängt. Dadurch wird die Planfläche 17 des Einsatzes 3 mit entsprechend großer Kraft gegen die Planfläche 6 an dem Aufnahmekörper 2 angepresst, während die gegeneinander verspannten, zueinander koaxialen Konusflächen 9, 22 an dem Aufnahmekörper bzw. an dem Einsatz 3 den Einsatz 3 bezüglich des Aufnahmekörpers 2 radial exakt zentrieren, so dass alle Vorteile einer Kegel-/Plananlage gegeben sind.

Zum Auskuppeln des Einsatzes 3 wird die Druckschraube 36 gelöst, womit die Aufnahmebohrung 4 aus ihrer im gespanntem Zustand leicht ovalen Gestalt durch ihre Eigenelastizität wieder in die zylindrische Gestalt zurückkehrt. Die Konusflächen 9, 22 werden axial entlastet und der Einsatz 3 kann aus der Position nach Figur 10, entgegen der Pfeilrichtung 41 wieder in die entspannte Position nach Figur 9 zurückgedreht werden, in der die an der jeweiligen Seitenwand 39 der Ausnehmung 19 anliegenden Mitnehmernasen 38 die Lageorientierung bilden. Der Einsatz 3 kann nunmehr leicht aus der Aufnahmebohrung 4 herausgezogen werden kann.

Die axialen Abstandsverhältnisse zwischen der Planfläche 6 und der ersten Konusfläche 9 des Aufnahmekörpers sowie zwischen der zweiten Planfläche 17 und der zweiten Konusfläche 22 des Einsatzes 3 sind so gewählt, dass bei in die Aufnahmebohrung 4 vollständig eingeschobenem Spannzapfen 15 und bei unbehindert aneinander anliegenden Planflächen 6, 17 in der entspannten Position nach Figur 9 ein geringes axiales Spiel zwischen den Planflächen bzw. den Konusflächen vorhanden ist, das es erlaubt den Einsatz 3 mit geringer Kraftanstrengung von Hand in die Lage nach Figur 10 zu verdrehen, in der die Konusflächen 9, 22 aufeinander liegen. Der Fügespalt zwischen den Planflächen 6, 17 ist in Figur 6 bei 42 angedeutet. Er liegt bei dem beschriebenen Ausführungsbeispiel in der Größenordnung von ca. 0,005 mm. Er kann abhängig von den jeweiligen Anforderungen und Gegebenheiten, beispielsweise den Größenabmessungen der Schnittstelle, auch größer oder kleiner gemacht sein.

Sollten sich beim Einsetzen des Einsatzes 3 in den Aufnahmekörper 2 auf einer der Planflächen 6, 17 oder einer der Konusflächen 9, 22 Verunreinigungen befinden, die beispielsweise eine Partikelgröße von größer als 0,01 mm aufweisen, kann der Einsatz 3 aus der Position nach Figur 9 nicht mehr in die Position nach Figur 10 verdreht werden, weil die genau maßhaltig feinst bearbeiteten Konusflächen 9, 22 nicht mehr übereinander bewegt werden können, sondern die Verzahnungsprofile des Aufnahmekörpers 2 und des Einsatzes 3 sich an den Rippen 11, 25 formschlüssig gegenseitig sperren. Auf diese Weise ist eine Fehlkupplung im Verschmutzungsfall ausgeschlossen und andererseits sichergestellt, dass bei ordnungsgemäßer Kupplung die Schnittstelle 1 spielfrei in Plananlage des Einsatzes 3 an dem Aufnahmekörper 2 vorgespannt und exakt zentriert ist.

Bei dem beschriebenen Ausführungsbeispiel sind zwei einander gegenüber liegende, durch den Gewindestift 30 und die Druckschraube 36 sowie die Kugel 35 etwa punktförmig ausgebildete Druckstellen am Umfang des Aufnahmekörpers 2 vorgesehen. Abhängig von den Gegebenheiten der jeweiligen Ausführungsform, insbesondere deren Abmessungen, können auch mehrere Druckstellen, beispielsweise drei in Umfangsrichtung gleichmäßig verteilte Druckstellen vorgesehen sein.

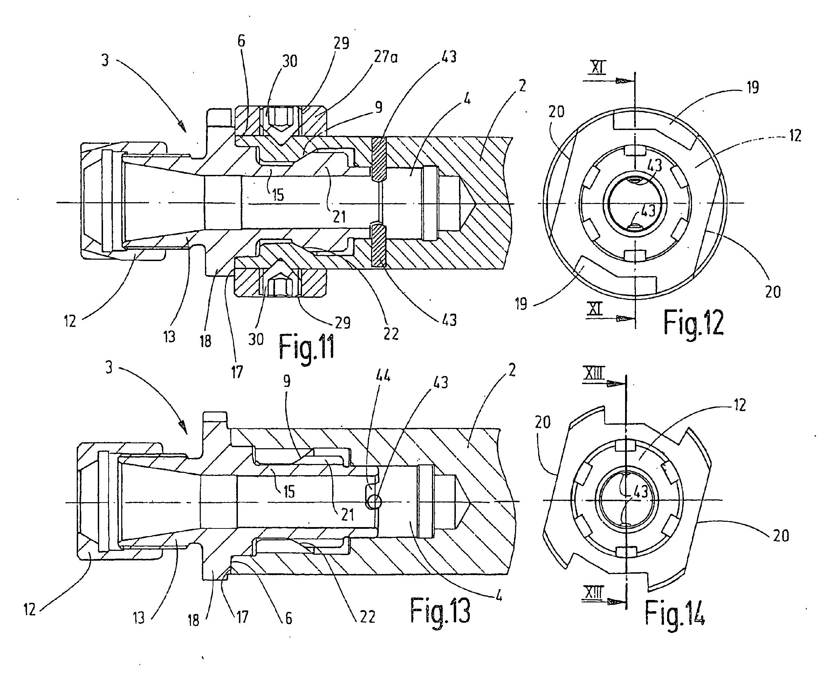

In den Figuren 11, 12 ist eine abgewandelte Ausführungsform der Werkzeugaufnahme- oder Haltevorrichtung nach den Figuren 1 bis 3 dargestellt. Gleiche Teile sind in beiden Ausführungsformen mit gleichen Bezugszeichen bezeichnet und nicht nochmals erläutert.

Während bei der Ausführungsform nach den Figuren 1 bis 3 die Mitnehmernasen 38 an dem Kopfring 27 angeformt sind, ist bei der Ausführungsform nach den Figuren 11, 12 ein Kopfring 27a verwendet, der keine Mitnehmernasen aufweist. Die Mitnehmermittel enthalten, wie aus Figur 11 zu ersehen, stattdessen zwei Zylinderstifte 43, die in einer gemeinsamen Querschnittsebene liegend diametral einander gegenüber stehen und in die Aufnahmebohrung 4 ragen. Außerdem ist der Einsatz 3, wie in Figur 4 dargestellt, mit einem Spannzapfen 15 ausgebildet, der an seinem von der Planfläche 17 weg weisenden freien Ende zwei diametral einander gegenüber liegende randoffene längliche Nuten 44 trägt, die bei in die Aufnahmebohrung 4 eingesetztem Spannzapfen 15 die Zylinderstifte 43 übergreifen, wie dies die Figur 11 (auch die Figur 13) zeigen. Die Weite der Nuten 44 in Umfangsrichtung ist so gewählt, dass sie im Zusammenwirken mit den Zylinderstiften 43, ähnlich wie die Mitnehmernasen 38 in den Ausnehmungen 19 der Figuren 9, 10, eine Lageorientierung des Einsatzes 3 bezüglich des Aufnahmekörpers 2 beim Ein- und Auskuppeln bewirken. Im gespannten Zustand übernehmen sie die Übertragung des Drehmoments zwischen dem Einsatz und dem Aufnahmekörper 2, wie dies auch die Mitnehmernasen 38 im Zusammenwirken mit den Seitenflächen 39a der Ausnehmungen 19 in bereits beschriebener Weise tun.

Anstelle von zwei Zylinderstiften 43 können bei größeren Systemen auch drei oder mehr Zylinderstifte 43 vorgesehen sein, wie auch Fälle denkbar sind, bei denen lediglich ein solcher Zylinderstift 43 vorhanden ist. Der abgewandelte Kopfring 27a ist bei diesem Ausführugnsbeispiel mit zwei Gewindeschrauben 30 ausgerüstet, so dass auf die Kugel 35 der Figur 3 verzichtet ist. Eine ähnliche Ausbildung des Kopfrings 27 der Figur 3 ist denkbar.

Die Ausführungsform nach den Figuren 11, 12 kann auch weiter so abgewandelt sein, dass auf den Kopfring 27a ganz verzichtet ist, wie dies die Ausführungsform nach den Figuren 13, 14 zeigt. Auch hier sind gleiche Teile mit den gleichen Bezugszeichen wie in Figur 11, 12 bzw. Figur 2 bis 6 bezeichnet und nicht nochmals erläutert.

Bei der Ausführungsform nach den Figuren 13, 14 erfolgt die axiale Spannung des Einsatzes 2 in dem Aufnahmekörper 2 beim Übergang von der entspannten Position nach Figur 9 in die gespannte Position nach Figur 3 dadurch, dass der Einsatz 3 mit einem entsprechend großen Drehmoment ein- bzw. ausgekuppelt wird, wozu erforderlichenfalls ein Schlüssel an die Schlüsselflächen 20 des Einsatzes 3 angesetzt wird. Die axialen Abstände zwischen den Planflächen 6, 17 und den Konusflächen 9 bzw. 22 des Aufnahmekörpers 2 und des Einsatzes 3 sind so gewählt, dass bei der Verdrehung des Einsatzes 3 aus der entspannten Position nach Figur 9 in die gespannte Position nach Figur 10 eine elastische Verformung zwischen dem Aufnahmekörper 2 und dem Einsatz 3 im Bereiche der Ringquerschnitte außerhalb bzw. innerhalb der Konusflächen 9, 22 erzeugt wird. Um die gegenseitige Eingriffnahme der Konusflächen 9, 22 bei der Verdrehung des Einsatzes während des Einkuppelns zu erleichtern, kann an den Randkanten 45, 46 der Rippen 25 des Einsatzes 3 und/oder der Rippen 11 der Aufnahmebohrung 4 des Aufnahmekörpers 2 im Bereiche der Konusflächen 22 bzw. 9 eine Anlauffase vorgesehen sein, die dies bei 45, 46 in den Figuren 9, 10 angedeutet ist. Dazu kann unter Umständen bereits die sich bei der Herstellung des Verzahnungsprofils ergebende Fase genügen.

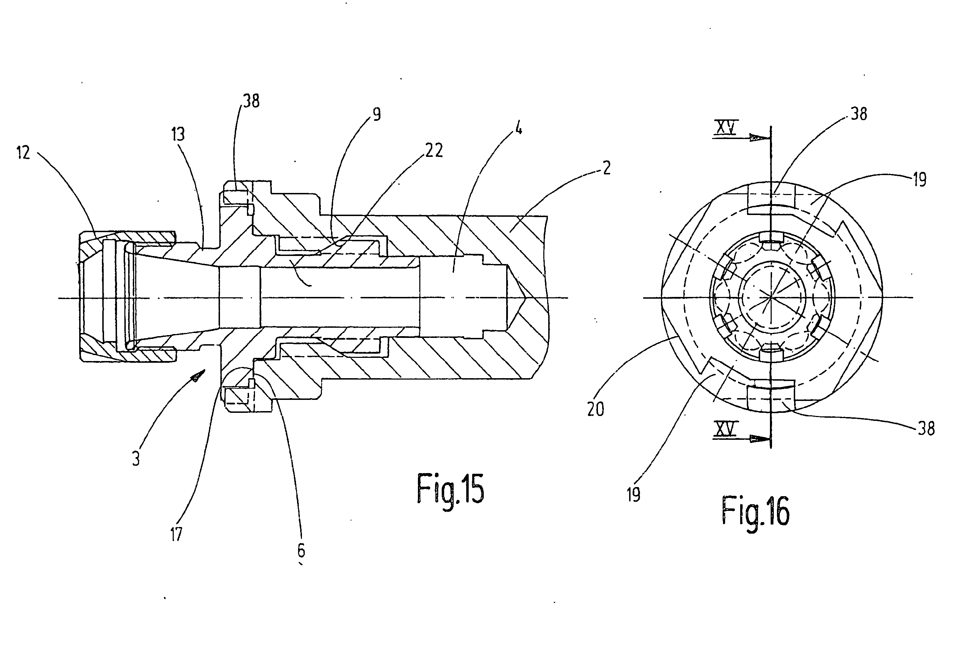

Ohne Kopfring 27 bzw. 27a ist auch eine weitere Ausführungsform nach den Figuren 15, 16 ausgebildet, bei der die axiale Spannung des Einsatzes 3 in dem Aufnahmekörper 2 in gleicher Weise wie bei der Ausführungsform nach den Figuren 13, 14 erfolgt. Gleiche Teile sind deshalb auch hier mit gleichen Bezugszeichen bezeichnet.

Während aber bei der Ausführungsform nach den Figuren 13, 14 die Mitnehmermittel Zylinderstifte 43 in dem Aufnahmekörper 2 und damit zusammenwirkende Nuten 44 in dem Spannzapfen 15 des Einsatzes 3 beinhalten, sind bei der Ausführungsform nach den Figuren 15, 16 die Mitnehmermittel so gestaltet, dass Mitnehmernasen 38 unmittelbar an dem Aufnahmekörper stirnseitig angeformt sind. Die Mitnehmernasen 38 wirken mit den Ausnehmungen 19 eines eingesetzten Einsatzes 3 in gleicher Weise zusammen wie dies bereits anhand der Figuren 2, 3 und 9, 10 beschrieben worden ist. Im Übrigen könnte auch bei der Ausführungsform nach den Figuren 1 bis 8 der Aufnahmekörper 2 unmittelbar mit den Mitnehmernasen 38 ausgebildet sein und einen Kopfring 27a entsprechend Figur 11 tragen. Die Nuten 44 des Spannzapfens 15 des Einsatzes 3 können in diesem Fall naturgemäß entfallen.

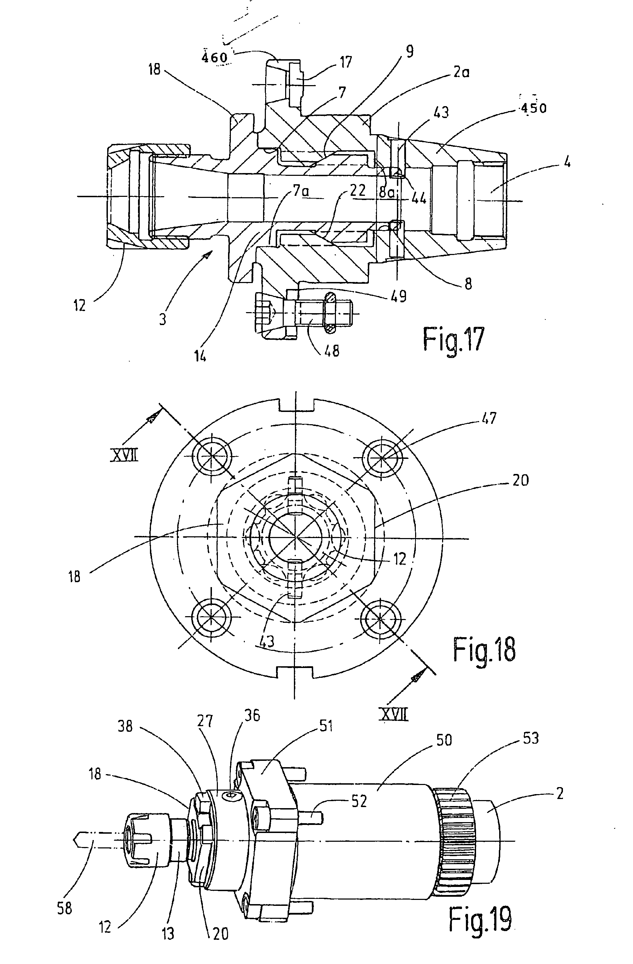

Wenngleich der Aufnahmekörper 2 bei den bisher beschriebenen Ausführungsformen als zylindrische Spindel ausgebildet ist, stellt dies keine Beschränkung für die Gestaltung des Aufnahmekörpers 2 dar. Die Aufnahmebohrung 4 kann in an sich beliebigen zweckentsprechenden Konstruktionsteilen, beispielsweise in der Revolverscheibe eines Werkzeugrevolvers, etc. angeordnet sein. Ein Beispiel für eine andere Gestaltung des Aufnahmekörpers 2 ist in den Figuren 17, 18 veranschaulicht, in denen mit der Ausführungsform nach den Figuren 13, 14 gleiche Teile mit gleichen Bezugszeichen versehen und nicht nochmals erläutert sind.

Der Aufnahmekörper 2a ist Teil eines Werkzeugschnellwechselsystems nach der DE 102 19 600 C5 und zeigt, dass die neue Schnittstelle System übergreifend einsetzbar ist. Bei dieser Ausführungsform ist der Aufnahmekörper 2a als Werkzeugspanneinsatz ausgebildet, der mit einem kegeligen Aufnahmezapfen 450 in eine zur Aufnahme einer Spannzange eingerichtete kegelige Bohrung eines (nicht dargestellten) Werkzeugträgers einsetzbar ist. Der Aufnahmekörper 2a ist mit einem angeformten Flansch 460 versehen der vier gleichmäßig verteilte, achsparallele Bohrungen 47 zur Aufnahme von Befestigungsschraubenbolzen 48 aufweist. Der eine Planfläche 49 aufweisende Aufnahmekörper 2a wird an dem Werkzeugträger in einer in der vorgenannten Druckschrift näher bezeichneten Weise befestigt, wobei diese Befestigung nicht Gegenstand der vorliegenden Erfindung ist. Er ist mit der hier als Durchgangsbohrung ausgebildeten Aufnahmebohrung 4 versehen und in deren Bereich entsprechend der Ausführungsform nach den Figuren 13, 14 gestaltet. Die Spannung des Einsatzes 3 erfolgt ähnlich wie anhand von Figur 13 erläutert, durch eine elastische axiale Verformung des Aufnahmekörpers 2a und des Spannzapfens 15 beim Verdrehen des Einsatzes 3 aus der entspannte Position nach Figur 9 in die gespannte Position nach Figur 10. Mitnehmermittel weisen Zylinderstifte 43 und Nuten 44, entsprechend den Figuren 11, 13 auf. Im Zusammenwirken der Planfläche 6, 17 und der Konusflächen 9, 22 ist auch bei dieser Ausführungsform eine einwandfreie Rundlaufgenauigkeit gewährleistet.

Wie bereits eingangs erwähnt, kann der die Aufnahmebohrung 4 enthaltende Aufnahmekörper 2 feststehend oder drehbar gelagert angeordnet sein. Eine typische Anwendung für einen drehbar gelagerten Aufnahmekörper 2 ist in Figur 19 veranschaulicht, in der wiederum mit bereits beschriebenen Ausführungsformen gleiche Teile mit gleichen Bezugszeichen versehen und nicht nochmals erläutert sind.

Figur 19 zeigt eine sogenannte Antriebseinheit, die ein Gehäuse 50 aufweist, in dem der als zylindrische Spindel ausgebildete Aufnahmekörper 2 drehbar gelagert ist und das einen Flansch 51 aufweist, der mit Einrichtungen zur Aufnahme von Befestigungsschrauben 52 ausgebildet ist. Auf das aus dem Gehäuse 50 vorragende freie Ende des spindelförmigen Aufnahmekörpers 2 ist ein Zahnrad 53 aufgesetzt, das bei in eine entsprechende Trägereinrichtung, beispielsweise in eine Revolverscheibe eingesetztem Gehäuse 50 mit einer Antriebsquelle getrieblich verbunden ist.

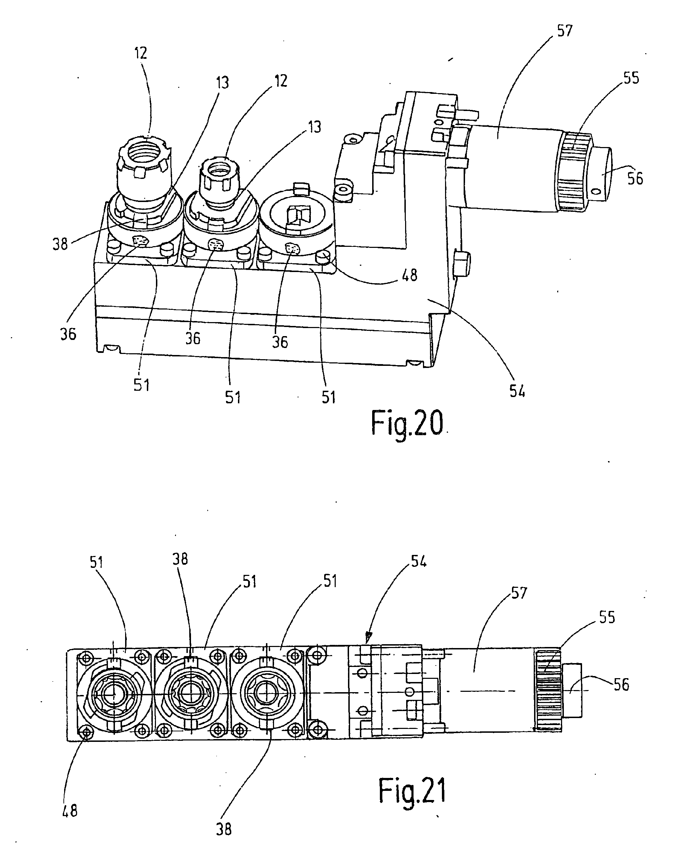

Antriebseinheiten nach Figur 19 können zum Beispiel in einen 3-Spindelfrontalbohrapparat eingesetzt sein, wie er in den Figuren 20, 21 veranschaulicht ist, in denen wiederum mit bereits beschriebenen Ausführungsbeispielen gleiche Teile mit gleichen Bezugszeichen versehen und nicht nochmals erläutert sind.

Wie die Figuren 20, 21 zeigen, weist der Frontalbohr-apparat ein im Wesentlichen L-förmiges Gehäuse 54 auf, auf dessen einem Schenkel drei Antriebseinheiten unmittelbar aneinander anstoßend angeordnet sind, derart, dass ihre Spannzangenaufnahmen 13 mit ihrer Achse in einer gemeinsamen Ebene liegend parallel zueinander verlaufen. Die Figuren 20, 21 zeigen deutlich einen großen Vorteil der neuen Schnittstelle der darin liegt, dass auch bei beengten Platzverhältnissen, wie sie hier gegeben sind, die Einsätze 3 leicht ein- und ausgekuppelt werden können. Dazu genügt es bei der hier dargestellten Ausführungsform entsprechend den Figuren 1 bis 6, den jeweiligen Einsatz 3 von vorne her mit seinem Spannzapfen 15 in die jeweilige Aufnahmebohrung 4 einzuschieben, ihn aus der Position nach Figur 9 in die gespannte Position nach Figur 10 zu verdrehen und ihn sodann durch Anziehen der Druckschraube 36 festzuspannen. Die Druckschraube 36 ist von der Seite her leicht zugänglich und bedarf für die Spannung lediglich eines Bruchteils einer Umdrehung. Für den Fall, dass die seitliche Zugänglichkeit der Druckschraube nicht gegeben sein sollte, kann eine der erläuterten Ausführungsformen ohne Kopfring 27, 27a zum Einsatz kommen.

Die Zahnräder 53 der einzelnen Antriebseinheiten nach Figur 19 sind in dem Gehäuse 54 getrieblich miteinander und mit einem gemeinsamen Antriebszahnrad 55 gekuppelt, das auf einer Welle 56 sitzt, die in einem zylindrischen Lagerteil 57 drehbar gelagert ist, das an dem Gehäuse 54 vorragend angeordnet ist.

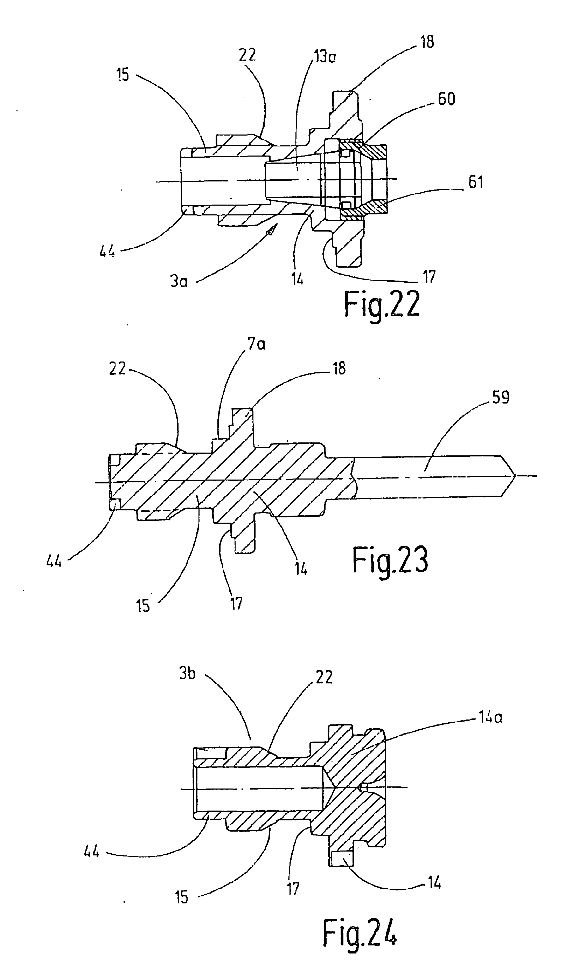

Bei den beschriebenen Ausführungsformen ist der Einsatz 3 als Werkstück- oder Werkzeughaltereinsatz jeweils mit einer Spannzangenaufnahme 13 ausgebildet, in der ein Werkstück oder ein Werkzeug, beispielsweise ein Bohrer 58, entsprechend Figur 19 gespannt sein kann. Anstelle dieser Spannzangenaufnahme 13 können aber auch alle anderen bekannten Ausführungen von Werkstück- oder Werkzeugaufnahmen Verwendung finden; beispielsweise ein Fräserdorn, ein Morsekonus und dergleichen, können an dem Einsatzkörper 14 vorgesehen sein. Auch kann der Einsatz 3 mit dem zugehörigen Werkzeug, beispielsweise einem Bohrer 59, einstückig aus Stahl oder Hartmetall ausgebildet sein, wie dies die Figur 23 zeigt.

Anstelle einer Spannzangenaufnahme 13 mit Außengewinde und einer Überwurfmutter 12 (vgl. beispielsweise Figur 3) kann auch ein Einsatz 3a verwendet werden wie er in Figur 22 dargerstellt ist. Bei dieser Ausführung ist die Spannzangenaufnahme 13a mit einem Innengewinde 60 ausgebildet, in das eine Spannmutter 61 mit Außengewinde eingeschraubt ist. Dies ergibt eine besonders platzsparende Ausführung, die dann von Vorteil ist, wenn besonders beengte Bauräume vorliegen.

Figur 24 schließlich zeigt noch einen Einsatz 3b, der als Stopfen ausgebildet ist, um eine nicht benutzte Aufnahmebohrung 4, beispielsweise bei dem 3-Spindelfrontalbohrapparat nach Figur 20, 21 zu verschließen. Der Einsatzkörper 14a ist in diesem Falle als massives Stopfenteil ausgebildet, an das sich der Spannzapfen 15 anschließt, der entsprechend Figur 4 gestaltet ist. Dieser Einsatz kann, da er in der Regel keiner Belastung ausgesetzt ist, auch aus Kunststoff hergestellt sein. Mit seiner Konusfläche 22 wird er, ebenso wie der Einsatz 3 nach Figur 4, in dem Aufnahmekörper 2 gespannt, wie dies anhand der Figur 9, 10 erläutert worden ist. Eigene Mitnehmermittel können gegebenenfalls entfallen oder aber es genügt zum Beispiel eine Ausnehmung 19. Erforderlichenfalls kann der Spannzapfen 15 auch mit Nuten 44 versehen sein.

Beispielsweise bei der Ausführungsform nach den Figuren 1 bis 8 ist die erste Konusfläche 9 in der Aufnahmebohrung 4 in einem axialen Abstand von der ersten Planfläche 6 angeordnet. Dieser Abstand kann auch größer oder kleiner sein als dargestellt. Er kann unter Umständen auch ganz entfallen, sodass sich die Konusfläche 9 im Wesentlichen unmittelbar an die Vorzentrierfläche 7 oder die Planfläche 6 anschließt.

Die Kegelwinkel der Konusflächen 9, 22 sind in der Regel gleich groß. Sie können sich aber auch geringfügig voneinander unterscheiden.

## Patentansprüche

1. Kombination eines Aufnahmekörpers (2) und eines insbesondere als Werkzeug- oder Werksktückhalter ausgebildeten Einsatzes (3), der mit dem Aufnahmekörper verbindbar ist, wobei
der Aufnahmekörper auf einer Stirnseite eine zylindrische Aufnahmebohrung (4) aufweist, die von einer rechtwinklig zu der Bohrungsachse (5) verlaufenden, fein bearbeiteten, maßhaltigen ersten Planfläche (6) umgeben ist und in der eine zu der Bohrungsachse koaxiale, erste Konusfläche (9) mit ihrem verjüngten Ende zu der ersten Planfläche hin weisend angeordnet ist, die an der Innenwandung der Aufnahmebohrung ausgebildet und durch achsparallele ,rinnen- oder nutenartige Vertiefungen (10) unter Ausbildung eines verzahnungähnlichen Innenprofils unterbrochen ist und
der Einsatz einen Einsatzkörper (14) bzw. einen Spannzapfen (15) aufweist, der zum Einstecken in die Aufnahmebohrung eingerichtet und von einer rechtwinklig zu der Spannzapfenachse (16) verlaufenden, fein bearbeiteten, maßhaltigen zweiten Planfläche (17) umgeben ist und der mit einem im axialen Abstand von der zweiten Planfläche angeordneten koaxialen Profilteil (21) größeren Durchmessers ausgebildet ist, das eine zweite Konusfläche (22) trägt, die mit ihrem verjüngten Ende (23) zu der zweiten Planfläche hin weisend angeordnet und durch achsparallele, rinnen- oder nutenartige Vertiefungen (24) unterbrochen ist, die unter Ausbildung eines verzahnungsähnlichen Außenprofils mit gleicher Teilung und komplementär zu den Vertiefungen des die erste Konusfläche tragenden Innenprofils der Aufnahmebohrung ausgebildet sind, **dadurch gekennzeichnet, dass**
bei in die Aufnahmebohrung (4) des Aufnahmekörpers (2) eingesetztem Einsatzkörper die beiden Planflächen (6, 17) auf einander liegen und die beiden Konusflächen (9, 22) des Innen- und des Außenprofils durch eine begrenzte Verdrehung des Spannzapfens gegenüber der Aufnahmebohrung aus einer entspannten Position zur gegenseitigen Überdeckung in eine Spannposition bringbar sind und in der Spannposition die beiden Planflächen *dadurch* unter einer Vorspannung axial auf einander gepresst sind, *dass der Einsatz (3) über seine Konusfläche (22) in die Tiefe der Aufnahmebohrung hinein gezogen ist.*

2. Kombination nach Anspruch 1, **dadurch gekennzeichnet, dass** der Aufnahmekörper (2) und der Einsatz (3) jeweils eine Vorzentrierfläche (7,8; 7a,8a) aufweisen und dass wenigstens zwei einander zugeordnete Vorzentrierflächen des Aufnahmekörpers und des Einsatzes bei in die Aufnahmebohrung eingesetztem Spannzapfen an einander anliegend angeordnet sind.

3. Kombination nach Anspruch 2, **dadurch gekennzeichnet, dass** wenigstens zwei Paare einander zugeordneter koaxialer Vorzentrierflächen (7,8; 7a,8a) an dem Aufnahmekörper (2) und dem Einsatz (3) in Achsrichtung von einander beabstandet angeordnet sind.

4. Kombination nach einem der vorhergehenden Ansprüche, **dadurch gekennzeichnet, dass** an dem Aufnahmekörper (2) und dem Einsatz (3) Mitnehmermittel (19,38) vorgesehen sind, die bei in die Aufnahmebohrung (4) eingesetztem Spannzapfen (15) formschlüssig zusammenwirkend ausgebildet sind.

5. Kombination nach Anspruch 4, **dadurch gekennzeichnet, dass** Mitnehmermittel des Aufnahmekörpers und damit zusammenwirkende Mitnahmemittel des Einsatzes (3) eine begrenzte Verdrehbewegung des Einsatzes (3) bezüglich des Aufnahmekörpers (2) ermöglichend ausgebildet ist.

6. Kombination nach Anspruch 4 oder 5, **dadurch gekennzeichnet, dass** Mitnehmermittel (38;43) des Aufnahmekörpers (2) an dem Aufnahmekörper selbst oder einem damit verbundenen Teil (27) und damit zusammenwirkende Mitnehmermittel (19;44) des Einsatzes (3) an diesem selbst oder einem damit verbundenen Teil angeordnet sind.

7. Kombination nach Anspruch 1, **dadurch gekennzeichnet, dass** an dem Aufnahmekörper (2) und/oder dem Einsatz (3) Spannmittel (26) angeordnet sind durch die die beiden Planflächen (6,17) bei in die Aufnahmebohrung (4) eingesetztem Spannzapfen (15) gegeneinander verspannbar sind.

8. Kombination nach Anspruch 7, **dadurch gekennzeichnet, dass** die Spannmittel (27,36) von der Außenseite des Aufnahmekörpers (2) her betätigbar ausgebildet sind.

9. Kombination nach Anspruch 7 oder 8, **dadurch gekennzeichnet, dass** die Spannmittel auf die Konusflächen (9,22) einwirkend ausgebildet sind.

10. Kombination nach den Ansprüchen 7 und 8, **dadurch gekennzeichnet, dass** die Spannmittel ein an dem Aufnahmekörper (2) angeordnetes Spannelement (27,27a) aufweisen, das bei Betätigung den Aufnahmekörper (2) elastisch radial verformend ausgebildet ist.

11. Aufnahmekörper für eine Kombination eines Aufnahmekörpers und eines insbesondere als Werkzeug- oder Werkstückhalter ausgebildeten Einsatzes, der mit dem Aufnahmekörper verbindbar ist und *eine zu einer Stirnseite hin sich öffnende zylindrische Aufnahmebohrung (4) aufweist,* nach einem der vorhergehenden Ansprüche, **dadurch gekennzeichnet, dass** er eine im Bereiche der Stirnseite angeordnete, rechtwinklig zu der Bohrungsachse verlaufende fein bearbeitete, maßhaltige erste Planfläche (6) aufweist, die zur unbehindert satten Auflage einer feinbearbeiteten maßhaltigen Planfläche eines in die Aufnahmebohrung eingesetzten Einsatzes ausgebildet ist und dass in der Aufnahmebohrung eine zu der Bohrungsachse (5) konzentrische erste Konusfläche (9) mit ihrem verjüngten Ende zu der ersten Planfläche (6) hin weisend angeordnet ist, die an der Innenwandung der Aufnahmebohrung ausgebildet und durch achsparallele rinnen- oder nutenartige Vertiefungen (10) unter Ausbildung eines verzahnungsähnlichen Innenprofils unterbrochen ist, das im axialen Abstand von der Planfläche angeordnet ist.

12. Aufnahmekörper nach Anspruch 11, **dadurch gekennzeichnet, dass** er wenigstens eine zu der Bohrungsachse konzentrische, zylindrische Vorzentrierfläche (7,8) für einen in die Aufnahmebohrung eingesetzten Spannzapfen (15) aufweist.

13. Aufnahmekörper nach Anspruch 12, **dadurch gekennzeichnet, dass** er eine erste Vorzentrierfläche (7), die der ersten Planfläche (6) benachbart oder unmittelbar an diese anschließend angeordnet ist und eine zweite Vorzentrierfläche (8) aufweist, die von der ersten Vorzentrierfläche (7) axial beabstandet in der Tiefe der Aufnahmebohrung (4) angeordnet ist.

14. Aufnahmekörper nach Anspruch 11, **dadurch gekennzeichnet, dass** er Mitnehmermittel (38,43) zur formschlüssigen Kupplung mit einem mit seinem Spannzapfen (15) in die Aufnahmebohrung (4) eingesetzten Einsatz (3) aufweist, die an dem Aufnahmekörper (2) selbst oder einem mit diesem verbundenen Teil (27) angeordnet sind.

15. Aufnahmekörper nach Anspruch 14, **dadurch gekennzeichnet, dass** die Mitnehmermittel wenigstens ein in die Aufnahmebohrung ragendes Kupplungsteil (43) aufweisen.

16. Aufnahmekörper nach Anspruch 14, **dadurch gekennzeichnet, dass** die Mitnehmermittel wenigstens ein im Bereich der Stirnseite des Aufnahmekörpers (2) angeordnetes Kupplungsteil (38) aufweisen.

17. Aufnahmekörper nach Anspruch 11, **dadurch gekennzeichnet, dass** er Spannmittel für einen mit seinem Spannzapfen (15) in die Aufnahmebohrung (4) eingesetzten Einsatz (3) aufweist.

18. Aufnahmekörper nach Anspruch 17, **dadurch gekennzeichnet, dass** die Spannmittel von der Außenseite des Aufnahmekörpers (2) her betätigbar ausgebildet sind.

19. Aufnahmekörper nach Anspruch 17, **dadurch gekennzeichnet, dass** die Spannmittel einen auf den Aufnahmekörper (2) aufgesetzten Ring (27) aufweisen, der wenigstens ein radial nach innen auf den Aufnahmekörper (2) einwirkendes Spannelement (30,36) aufweist, durch das der Aufnahmekörper im Bereiche seiner ersten Konusfläche (9) elastisch radial verformbar ist.

20. Aufnahmekörper nach Anspruch 19, **dadurch gekennzeichnet, dass** er wenigstens zwei längs seines Umfanges von einander beabstandet angeordnete Spannelemente (30,36) aufweist, von denen zumindest eines im Wesentlichen punktförmig auf den Aufnahmekörper (2) einwirkend ausgebildet ist.

21. Aufnahmekörper nach Anspruch 19 oder 20, **dadurch gekennzeichnet, dass** der Ring (27,27a) wenigstens zwei Spannelemente (30,36) aufweist, von denen wenigstens eines radial verstellbar ausgebildet ist.

22. Aufnahmekörper nach Anspruch 19, **dadurch gekennzeichnet, dass** der Ring (27,27a) gegenüber dem Aufnahmekörper (2) abgedichtet ist.

23. Aufnahmekörper nach Anspruch 11, **dadurch gekennzeichnet, dass** die Konusfläche (9) im Bereich der Berandung (45) der Unterbrechung eine Anlauffase aufweist.

24. Einsatz, insbesondere Werkzeug- oder Werkstückhalter, für eine Kombination eines Aufnahmekörpers und eines insbesondere als Werkzeug oder Werkstückhalter ausgebildeten Einsatzes, der mit einem Spannzapfen in die Aufnahmebohrung des Aufnahmekörpers einsetzbar ist, nach einem der Ansprüche 1 bis 10, **dadurch gekennzeichnet, dass** er einen Einsatzkörper (14) mit dem einseitig von diesem vorragenden Spannzapfen (15) aufweist, der von einer fein bearbeiteten, maßhaltigen Planfläche (17), zumindest teilweise umgeben ist, die rechtwinklig zu der Spannzapfenlängsachse (16) verläuft und zur unbehindert satten Auflage auf einer feinbearbeiteten maßhaltigen Planfläche des den Einsatz aufnehmenden Aufnahmekörpers ausgebildet ist und dass an dem Spannzapfen im axialen Abstand von der Planfläche ein koaxiales Profilteil (21) größeren Durchmessers ausgebildet ist, das eine Konusfläche (22) trägt, die mit ihrem verjüngten Ende (23) zu der zweiten Planfläche hinweisend angeordnet und durch achsparallele rinnen- oder nutenartige Vertiefungen (24) unterbrochen ist, durch die ein verzahnungsähnliches Außenprofil ausgebildet ist.

25. Einsatz nach Anspruch 24, **dadurch gekennzeichnet, dass** der Spannzapfen (15) zumindest bereichsweise im wesentlichen zylindrisch ist.

26. Einsatz nach Anspruch 24, **dadurch gekennzeichnet, dass** die Konusfläche (22) im Bereiche der Berandung (46) der Vertiefungen (24) mit Anlauffasen versehen ist.

27. Einsatz nach Anspruch 24, **dadurch gekennzeichnet, dass** er wenigstens eine zu der Spannzapfenlängsachse (16) koaxiale zylindrische Vorzentrierfläche (7a) aufweist.

28. Einsatz nach Anspruch 27, **dadurch gekennzeichnet, dass** er eine der Planfläche(17) benachbarte oder unmittelbar an diese anschließend angeordnete erste Vorzentrierfläche (7a) und eine in Spannzapfenlängsachsenrichtung von der Planfläche beabstandete zweite Vorzentrierfläche (8a) aufweist.

29. Einsatz nach Anspruch 28, **dadurch gekennzeichnet, dass** die zweite Vorzentrierfläche (8a) nahe des freien Endes des Spannzapfens (15) angeordnet ist.

30. Einsatz nach Anspruch 24, **dadurch gekennzeichnet, dass** er Mitnehmermittel zur formschlüssigen Kupplung mit einem Aufnahmekörper (2) aufweist, in dessen Aufnahmebohrung (4) er mit seinem Spannzapfen (15) eingesetzt ist.

31. Einsatz nach Anspruch 30, **dadurch gekennzeichnet, dass** Mitnehmermittel (44) im Bereiche des Spannzapfens angeordnet sind.

32. Einsatz nach Anspruch 30, **dadurch gekennzeichnet, dass** die Mitnehmermittel eine im Bereich des freien Spannzapfenendes angeordnete randoffenen Ausnehmung (44) aufweisen.

33. Einsatz nach Anspruch 30, **dadurch gekennzeichnet, dass** Mitnehmermittel (19) an dem Einsatzkörper (14) oder einem mit diesem verbundenen Teil angeordnet sind.

34. Einsatz nach Anspruch 30, **dadurch gekennzeichnet, dass** die Mitnehmermittel die Drehbewegung des Einsatzes (3) gegenüber einem Aufnahmekörper (2) in beiden Drehrichtungen begrenzend ausgebildet sind.

35. Einsatz nach Anspruch 24, **dadurch gekennzeichnet, dass** der Einsatzkörper (14) Einrichtungen (13) zur drehfesten Verbindung mit einem Werkzeug oder einem Werkstück aufweist.

36. Einsatz nach Anspruch 24, **dadurch gekennzeichnet, dass** er einstückig mit einem Werkzeug (59) ausgebildet ist.

37. Einsatz nach Anspruch 24, **dadurch gekennzeichnet, dass** die Vertiefungen (24) sich über das zu dem Spannzapfen koaxiale Profilteil (21) erstrecken auf dem die Konusfläche (22) angeordnet ist.

38. Einsatz nach Anspruch 24, **dadurch gekennzeichnet, dass** er als Stopfen für eine Aufnahmebohrung (4) eines Aufnahmekörpers (2) ausgebildet ist.

## Claims

1. Combination of a mounting body (2) and an insert (3), which is configured in particular as a tool or workpiece holder and which is connectable to the mounting body, wherein
on a front side the mounting body has a cylindrical receiving bore (4), which is surrounded by a finely machined, dimensionally exact first end face (6) running at right angles to the bore axis (5) and in which a first cone face (9) coaxial to the bore axis is arranged with its tapered end pointing towards the first end face, said cone face being configured on the inside wall of the receiving bore and interrupted by axis-parallel channel- or groove-like depressions (10) forming a toothing-like inside profile, and
the insert has an insert body (14) or a clamping spigot (15), which is fitted to plug into the receiving bore and is surrounded by a finely machined, dimensionally exact second end face (17) running at right angles to the clamping spigot axis (16) and which is configured with a coaxial profile part (21) of larger diameter, which is axially spaced from the second end face and bears a second cone face (22), which is arranged with its tapered end (23) pointing towards the second end face and is interrupted by axis-parallel, channel- or groove-like depressions (24), which forming a toothing-like outside profile are configured with the same pitch and complementary to the depressions of the first inside profile of the receiving bore bearing the first cone face,
**characterised in that** when the insert body is inserted into the receiving bore (4) of the mounting body (2), the two end faces (6, 17) lie on top of one another and by a restricted rotation of the clamping spigot in relation to the receiving bore the two cone faces (3, 22) of the inside and the outside profiles can be brought out of an unclamped position for overlapping one another into a clamping position, and in the clamping position the two end faces are pressed axially onto one another under prestress as a result of the insert (3) being drawn into the depth of the receiving bore via its cone face (22).

2. Combination according to claim 1, **characterised in that** the mounting body (2) and the insert (3) respectively have a pre-centring face (7, 8; 7a, 8a), and that at least two associated pre-centring faces of the mounting body and the insert are arranged to abut against one another when the clamping spigot is inserted into the receiving bore.

3. Combination according to claim 2, **characterised in that** at least two pairs of associated coaxial pre-centring faces (7,8; 7a, 8a) are spaced from one another in axial direction on the mounting body (2) and the insert (3).

4. Combination according to one of the preceding claims, **characterised in that** entrainment means (19, 38), which are configured to interact in a positive-locking manner when the clamping spigot (15) is inserted into the receiving bore (4), are provided on the mounting body (2) and the insert (3).

5. Combination according to claim 4, **characterised in that** entrainment means of the mounting body and entrainment means of the insert (3) interacting therewith is? configured to enable a restricted relative rotational movement of the insert (3) in relation to the mounting body (2).

6. Combination according to claim 4 or 5, **characterised in that** entrainment means (38; 43) of the mounting body (2) are arranged on the mounting body itself or on a part (27) connected thereto and entrainment means (19; 44) of the insert (3) interacting therewith are arranged on this itself or on a part connected thereto.

7. Combination according to claim 1, **characterised in that** clamping means (26) are arranged on the mounting body (2) and/or the insert (3), by means of which clamping means the two end faces (6, 17) can be clamped against one another when the clamping spigot (15) is inserted into the receiving bore (4).

8. Combination according to claim 7, **characterised in that** the clamping means (27, 36) are configured to be operable from the outer surface of the mounting body (2).

9. Combination according to claim 7 or 8, **characterised in that** the clamping means are configured to act on the cone faces (9, 22).

10. Combination according to claims 7 and 8, **characterised in that** the clamping means have a clamping element (27, 27a), which is arranged on the mounting body (2) and is configured to elastically deform radially on operation of the mounting body (2).

11. Mounting body for a combination of a mounting body and an insert configured in particular as a tool or workpiece holder, which is connectable to the mounting body and has a cylindrical receiving bore (4) opening towards a front side, according to one of the preceding claims, **characterised in that** it has a finely machined, dimensionally exact end face (6), which is arranged in the region of the front side and runs at right angles to the bore axis and which is configured to snugly rest unhindered on a finely machined, dimensionally exact end face of an insert inserted into the receiving bore, and that a first cone face (9) concentric to the bore axis (5) is arranged in the receiving bore with its tapered end pointing towards the first end face (6), which is configured on the inside wall of the receiving bore and is interrupted by axis-parallel channel- or groove-like depressions (10) forming a toothing-like inside profile, which is axially spaced from the end face.

12. Mounting body according to claim 11, **characterised in that** it has at least one cylindrical pre-centring face (7, 8) concentric to the bore axis for a clamping spigot (15) inserted into the receiving bore.

13. Mounting body according to claim 12, **characterised in that** it has a first pre-centring face (7), which is arranged adjacent to the first end face (6) or directly adjoins this, and a second pre-centring face (8), which is arranged in the depth of the receiving bore (4) axially spaced from the first pre-centring face (7).

14. Mounting body according to claim 11, **characterised in that** it has entrainment means (38, 43), which are arranged on the mounting body (2) itself or on a part (27) connected thereto, for positive coupling with an insert (3) inserted into the receiving bore (4) with its clamping spigot (15).

15. Mounting body according to claim 14, **characterised in that** the entrainment means have at least one coupling part (43) projecting into the receiving bore.

16. Mounting body according to claim 14, **characterised in that** the entrainment means have at least one coupling part (38) arranged in the region of the front side of the mounting body (2).

17. Mounting body according to claim 11, **characterised in that** it has clamping means for an insert (3) inserted into the receiving bore (4) with its clamping spigot (15).

18. Mounting body according to claim 17, **characterised in that** the clamping means are configured to be operable from the outer surface of the mounting body (2).

19. Mounting body according to claim 17, **characterised in that** the clamping means have a ring (27), which is placed onto the mounting body (2) and has at least one clamping element (30, 36) acting radially inwards on the mounting body (2), by means of said clamping element the mounting body is elastically radially deformable in the region of its first cone face (9).

20. Mounting body according to claim 19, **characterised in that** it has at least two clamping elements (30, 36) spaced from one another along its periphery, of which at least one is configured to act on the mounting body (2) substantially in point form.

21. Mounting body according to claim 19 or 20, **characterised in that** the ring (27, 27a) has at least two clamping elements (30, 36), of which at least one is configured to be radially adjustable.

22. Mounting body according to claim 19, **characterised in that** the ring (27, 27a) is sealed in relation to the mounting body (2).

23. Mounting body according to claim 11, **characterised in that** the cone face (9) has an approach bevel in the region of the edging (45) of the interruption.

24. Insert, in particular tool or workpiece holder, for a combination of a mounting body and an insert, which is configured in particular as a tool or workpiece holder and can be inserted with a clamping spigot into the receiving bore of the mounting body, according to one of claims 1 to 10, **characterised in that** it has an insert body (14) with the clamping spigot (15) projecting from this on one side, which is at least partially surrounded by a finely machined, dimensionally exact end face (17), which runs at right angles to the longitudinal axis (16) of the clamping spigot and is configured to snugly rest unhindered on a finely machined, dimensionally exact end face of the mounting body receiving the insert, and that a coaxial profile part (21) of larger diameter is configured on the clamping spigot axially spaced from the end face, said profile part bearing a cone face (22), which is arranged to point towards the second end face with its tapered end (23) and is interrupted by axis-parallel channel- or groove-like depressions (24), by means of which a toothing-like outside profile is configured.

25. Insert according to claim 24, **characterised in that** the clamping spigot (15) is substantially cylindrical at least in sections.

26. Insert according to claim 24, **characterised in that** the cone face (22) is provided with approach bevels in the region of the edging (46) of the depressions (24).

27. Insert according to claim 24, **characterised in that** it has at least one cylindrical pre-centring face (7a) coaxial to the longitudinal axis (16) of the clamping spigot.

28. Insert according to claim 27, **characterised in that** it has a first pre-centring face (7a) arranged adjacent to the end face (17) or directly adjoining this and a second pre-centring face (8a) spaced from the end face in the direction of the longitudinal axis of the clamping spigot.

29. Insert according to claim 28, **characterised in that** the second pre-centring face (8a) is arranged close to the free end of the clamping spigot (15).

30. Insert according to claim 24, **characterised in that** it has entrainment means for positive coupling with a mounting body (2), into the receiving bore (4) of which it is inserted with its clamping spigot (15).

31. Insert according to claim 30, **characterised in that** entrainment means (44) are arranged in the region of the clamping spigot.

32. Insert according to claim 30, **characterised in that** the entrainment means have a recess (44), which is open at the edge and arranged in the region of the free clamping spigot end.

33. Insert according to claim 30, **characterised in that** entrainment means (19) are arranged on the insert body (14) or on a part connected thereto.

34. Insert according to claim 30, **characterised in that** the entrainment means are configured to restrict the rotational movement of the insert (3) in relation to a mounting body (2) in both directions of rotation.

35. Insert according to claim 24, **characterised in that** the insert body (14) has devices (13) for rotationally fixed connection to a tool or a workpiece.

36. Insert according to claim 24, **characterised in that** it is configured in one piece with a tool (59).

37. Insert according to claim 24, **characterised in that** the depressions (24) extend over the profile part (21) coaxial to the clamping spigot, on which the cone face (22) is arranged.

38. Insert according to claim 24, **characterised in that** it is configured as a plug for a receiving bore (4) of a mounting body (2).

## Revendications

1. Combinaison d'un corps de réception (2) et d'un insert (3), réalisé notamment comme support d'outil ou de pièce à usiner, qui peut être relié au corps de réception, dans laquelle
le corps de réception présente, sur une face frontale, un logement (4) cylindrique qui est entouré par une première surface plane (6) de dimensions prescrites, ayant subi un usinage de précision, s'étendant à angle droit par rapport à l'axe du logement (5), et dans lequel une première surface conique (9), qui est coaxiale avec l'axe du logement, est disposée de manière à être orientée avec son extrémité rétrécie en direction de la première surface plane et est réalisée sur la paroi intérieure du logement et est interrompue par des creux (10) en forme de rainures ou de gorges parallèles à l'axe, en formant un profil intérieur de type denture, et
l'insert présente un corps d'insert (14) ou un tenon de serrage (15) qui est agencé en vue de l'insertion dans le logement et est entouré par une deuxième surface plane (17) de dimensions prescrites, ayant subi un usinage de précision, s'étendant à angle droit par rapport à l'axe du tenon de serrage (16), et qui est réalisé avec un élément profilé (21) de plus grand diamètre qui est disposé à distance axiale de la deuxième surface plane et porte une deuxième surface conique (22) qui est disposée de manière à être orientée avec son extrémité rétrécie (23) en direction de la deuxième surface plane et est interrompue par des creux (24) en forme de rainures ou de gorges parallèles à l'axe, qui sont réalisés en formant un profil extérieur de type denture et présentent le même pas que les creux du profil intérieur du logement portant la première surface conique, et sont complémentaires de ceux-ci, **caractérisée en ce que** lorsque le corps d'insert est engagé dans le logement (4) du corps de réception (2), les deux surfaces planes (6, 17) sont appliquées l'une contre l'autre, et les deux surfaces coniques (9, 22) du profil intérieur et du profil extérieur peuvent être amenées, par une rotation limitée du tenon de serrage par rapport au logement, d'une position desserrée dans une position serrée, en vue de leur recouvrement mutuel, et dans la position serrée les deux surfaces planes sont pressées axialement l'une contre l'autre avec une précontrainte par le fait que l'insert (3) est tiré par l'intermédiaire de sa surface conique (22) dans la profondeur du logement.

2. Combinaison selon la revendication 1, **caractérisée en ce que** le corps de réception (2) et l'insert (3) présentent chacun une surface de précentrage (7, 8; 7a; 8a), et **en ce qu'**au moins deux surfaces de précentrage, associées l'une à l'autre, du corps de réception et de l'insert sont disposées de façon à être appliquées l'une contre l'autre lorsque le tenon de serrage est engagé dans le logement.

3. Combinaison selon la revendication 2, **caractérisée en ce qu'**au moins deux paires de surfaces de précentrage (7, 8; 7a, 8a) coaxiales associées les unes aux autres, sont disposées sur le corps de réception (2) et l'insert (3) en étant espacées l'une de l'autre dans la direction axiale.

4. Combinaison selon l'une des revendications précédentes, **caractérisée en ce que** sur le corps de réception (2) et l'insert (3), il est prévu des moyens d'entraînement (19, 38) qui sont réalisés de manière à coopérer mécaniquement lorsque le tenon der serrage (15) est engagé dans le logement (4).

5. Combinaison selon la revendication 4, **caractérisée en ce que** le moyen d'entraînement du corps de réception et le moyen d'entraînement de l'insert (3) qui coopère avec lui sont disposés de manière à permettre un mouvement de rotation limité de l'insert (3) par rapport au corps de réception (2).

6. Combinaison selon la revendication 4 ou 5, **caractérisée en ce que** des moyens d'entraînement (38; 43) du corps de réception (2) sont disposés sur le corps de réception lui-même ou sur un élément (27) relié à celui-ci, et des moyens d'entraînement (19; 44) de l'insert (3), coopérant avec ceux-ci, sont disposés sur l'insert lui-même ou sur un élément relié à celui-ci.

7. Combinaison selon la revendication 1, **caractérisée en ce que** sur le corps de réception (2) et/ou l'insert (3), sont disposés des moyens de serrage (26) qui permettent de serrer l'une contre les deux surfaces planes (6, 17) lorsque le tenon de serrage (15) est engagé dans le logement (4).

8. Combinaison selon la revendication 7, **caractérisée en ce que** les moyens de serrage (27; 36) sont réalisés de manière à pouvoir être actionnés à partir de l'extérieur du corps de réception (2).

9. Combinaison selon la revendication 7 ou 8, **caractérisée en ce que** les moyens de serrage sont réalisés de manière à agir sur les surfaces coniques (9, 22).

10. Combinaison selon les revendications 7 et 8, **caractérisée en ce que** les moyens de serrage présentent un élément de serrage (27, 27a) qui est disposé sur le corps de réception (2) et qui, en cas d'actionnement, est réalisé de façon à déformer le corps de réception (2) radialement de façon élastique.

11. Corps de réception pour une combinaison d'un corps de réception et d'un insert, réalisé notamment comme support d'outil ou de pièce à usiner, qui peut être relié au corps de réception et présente un logement (4) cylindrique qui s'ouvre en direction d'une face frontale, selon l'une des revendications précédentes, **caractérisé en ce qu'**il présente une première surface plane (6) de dimensions prescrites, ayant subi un usinage de précision, disposée dans la région de la face frontale et s'étendant à angle droit par rapport à l'axe du logement, qui est réalisée en vue de l'application à plat sans obstacle d'une surface plane de dimensions prescrites, ayant subi un usinage de précision, d'un insert engagé dans le logement, et **en ce qu'**une première surface conique (9), qui est concentrique à l'axe de logement (5), est disposée dans le logement de manière à être orientée avec son extrémité rétrécie en direction de la première surface plane (6) et est réalisée sur la paroi intérieure du logement et est interrompue par des creux (10) en forme de rainures ou de gorges parallèles à l'axe, en formant un profil intérieur de type denture qui est disposé à distance axiale par rapport à la surface plane.

12. Corps de réception selon la revendication 11, **caractérisé en ce qu'**il présente au moins une surface de précentrage (7, 8) cylindrique qui est concentrique à l'axe du logement et est destinée à un tenon de serrage (15) engagé dans le logement.

13. Corps de réception selon la revendication 12, **caractérisé en ce qu'**il présente une première surface de précentrage (7), qui est disposée de façon attenante à la première surface plane (6) ou directement à la suite de celle-ci, et une deuxième surface de précentrage (8) qui est disposée à distance axiale de la première surface de précentrage (7), dans la profondeur du logement (4).

14. Corps de réception selon la revendication 11, **caractérisé en ce qu'**il présente des moyens d'entraînement (38, 43) qui sont destinés à l'accouplement mécanique avec un insert (3), engagé dans le logement (4) avec son tenon de serrage (15), et qui sont disposés sur le corps de réception (2) lui-même ou un élément (27) relié à celui-ci.

15. Corps de réception selon la revendication 14, **caractérisé en ce que** les moyens d'entraînement présentent au moins un élément d'accouplement (43) avançant dans le logement.

16. Corps de réception selon la revendication 14, **caractérisé en ce que** les moyens d'entraînement présentent au moins un élément d'accouplement (38) disposé dans la région de la face frontale du corps de réception (2).

17. Corps de réception selon la revendication 11, **caractérisé en ce qu'**il présente des moyens de serrage pour un insert (3) engagé dans le logement (4) avec son tenon de serrage (15).

18. Corps de réception selon la revendication 17, **caractérisé en ce que** les moyens de serrage sont réalisés de manière à pouvoir être actionnés à partir de l'extérieur du corps de réception (2).

19. Corps de réception selon la revendication 17, **caractérisé en ce que** les moyens de serrage présentent une bague (27) qui est rapportée sur le corps de réception (2) et présente au moins un élément de serrage (30, 36) qui agit radialement vers l'intérieur sur le corps de réception (2) et qui permet de déformer le corps de réception (2) radialement de façon élastique, dans la région de sa première surface conique (9).

20. Corps de réception selon la revendication 19, **caractérisé en ce qu'**il présente au moins deux éléments de serrage (30, 36) qui sont disposés à distance l'un de l'autre le long de sa périphérie et dont au moins un est réalisé de manière à agir de façon sensiblement ponctuelle sur le corps de réception (2).

21. Corps de réception selon la revendication 19 ou 20, **caractérisé en ce que** la bague (27, 27a) présente au moins deux éléments de serrage (30, 36) dont au moins un est réalisé avec possibilité de déplacement radial.

22. Corps de réception selon la revendication 19, **caractérisé en ce que** la bague (27, 27a) est rendue étanche vis-à-vis du corps de réception (2).

23. Corps de réception selon la revendication 11, **caractérisé en ce que** la surface conique (9) présente un chanfrein de butée dans la région du bord (45) de l'interruption.

24. Insert, notamment support d'outil ou de pièce à usiner, pour une combinaison d'un corps de réception et d'un insert, réalisé notamment comme support d'outil ou de pièce à usiner, qui peut être engagé avec un tenon de serrage dans le logement du corps de réception, selon l'une des revendications 1 à 10, **caractérisé en ce qu'**il présente un corps d'insert (14) doté du tenon de serrage (15) qui fait saillie à partir d'un côté de celui-ci et est entouré au moins en partie par une surface plane (17) de dimensions prescrites, ayant subi un usinage de précision, qui s'étend à angle droit par rapport à l'axe longitudinal de tenon de serrage (16) et est réalisée en vue d'une application à plat, sans obstacle, contre une surface plane de dimensions prescrites, ayant subi un usinage de précision, du corps de réception recevant l'insert, et **en ce qu'**il est prévu sur le tenon de serrage, à distance axiale de la surface plane, un élément profilé (21) coaxial de plus grand diamètre, qui porte une surface conique (22), laquelle est disposée de manière à être orientée avec son extrémité (23) rétrécie en direction de la surface plane et est interrompue par des creux (24) en forme de rainures ou de gorges parallèles à l'axe, qui forment un profil extérieur de type denture.

25. Insert selon la revendication 24, **caractérisé en ce que** le tenon de serrage (15) est sensiblement cylindrique, du moins dans certaines zones.

26. Insert selon la revendication 24, **caractérisé en ce que** la surface conique (22) est dotée de chanfreins de butée dans la région du bord (46) des creux (24).

27. Insert selon la revendication 24, **caractérisé en ce qu'**il présente au moins une surface de précentrage (7a) cylindrique qui est coaxiale avec l'axe longitudinal de tenon de serrage (16).

28. Insert selon la revendication 27, **caractérisé en ce qu'**il présente une première surface de précentrage (7a), qui est disposée de façon attenante à la surface plane (17) ou directement à la suite de celle-ci, et une deuxième surface de précentrage (8a) qui est disposée à distance de la surface plane, dans le sens de l'axe longitudinal du tenon de serrage.

29. Insert selon la revendication 28, **caractérisé en ce que** la deuxième surface de précentrage (8a) est disposée à proximité de l'extrémité libre du tenon de serrage (15).

30. Insert selon la revendication 24, **caractérisé en ce qu'**il présente des moyens d'entraînement destinés à l'accouplement mécanique avec un corps de réception (2), dans le logement (4) duquel il est engagé avec son tenon de serrage (15).

31. Insert selon la revendication 30, **caractérisé en ce que** des moyens d'entraînement (44) sont disposés dans la région du tenon de serrage.

32. Insert selon la revendication 30, **caractérisé en ce que** les moyens d'entraînement présentent un évidement (44) à bord ouvert, qui est disposé dans la région de l'extrémité libre du tenon de serrage.

33. Insert selon la revendication 30, **caractérisé en ce que** des moyens d'entraînement (19) sont disposés sur le corps d'insert (14) ou un élément relié à celui-ci.

34. Insert selon la revendication 30, **caractérisé en ce que** les moyens d'entraînement sont réalisés de manière à limiter le mouvement de rotation de l'insert (3) par rapport à un corps de réception (2), dans les deux sens de rotation.

35. Insert selon la revendication 24, **caractérisé en ce que** le corps d'insert (14) présente des dispositifs (13) pour une liaison solidaire en rotation avec un outil ou une pièce à usiner.

36. Insert selon la revendication 24, **caractérisé en ce qu'**il est réalisé d'une seule pièce avec un outil (59).

37. Insert selon la revendication 24, **caractérisé en ce que** les creux (24) s'étendent sur l'élément profilé (21) qui est coaxial avec le tenon de serrage et sur lequel est disposée la surface conique (22).

38. Insert selon la revendication 24, **caractérisé en ce qu'**il est réalisé sous forme de bouchon pour un logement (4) d'un corps de réception (2).
